(19) Europäisches Patentamt
European Patent Office
Office européen des brevets

(11) Veröffentlichungsnummer : **0 374 656 B1**

(12) **EUROPÄISCHE PATENTSCHRIFT**

(45) Veröffentlichungstag der Patentschrift : **17.03.93 Patentblatt 93/11**

(51) Int. Cl.[5] : **C08G 64/06,** C08L 69/00

(21) Anmeldenummer : **89122774.6**

(22) Anmeldetag : **09.12.89**

# (54) Polycarbonate aus Alkylcyclohexylidenbisphenolen.

Die Akte enthält technische Angaben, die nach dem Eingang der Anmeldung eingereicht wurden und die nicht in dieser Patentschrift enthalten sind.

(30) Priorität : **23.12.88 DE 3843560**
**12.08.89 DE 3926719**

(43) Veröffentlichungstag der Anmeldung : **27.06.90 Patentblatt 90/26**

(45) Bekanntmachung des Hinweises auf die Patenterteilung : **17.03.93 Patentblatt 93/11**

(84) Benannte Vertragsstaaten : **BE DE ES FR GB IT NL**

(56) Entgegenhaltungen :
**DE-A- 2 546 717**
**DE-A- 3 345 945**
**US-A- 4 368 315**
**PATENT ABSTRACTS OF JAPAN vol. 10, no. 225 (P-484)(2281) 6 August 1986, & JP-A-61 62040**
**PATENT ABSTRACTS OF JAPAN vol. 10, no. 284 (P-501)(2340) 26 September 1986, & JP-A-61 105550**

(56) Entgegenhaltungen :
**PATENT ABSTRACTS OF JAPAN vol. 10, no. 225 (P-484)(2281) 6 August 1986, & JP-A-61 62039**
**SCHNELL,H.: "CHEMISTRY AND PHYSICS OF POLYCARBONATES" 1964, INTERSCIENCE PUBLISHERS, NEW YORK, p. 89, 104, 106;**

(73) Patentinhaber : **BAYER AG**
**W-5090 Leverkusen 1 Bayerwerk (DE)**

(72) Erfinder : **Serini, Volker, Dr.**
**Sebastian-Kneipp-Weg 2**
**W-4150 Krefeld (DE)**
Erfinder : **Freitag, Dieter, Dr.**
**Hasenheide 10**
**W-4150 Krefeld (DE)**
Erfinder : **Westeppe, Uwe, Dr.**
**Vogelskamp 72**
**W-4042 Mettmann (DE)**
Erfinder : **Idel, Karsten, Dr.**
**Am Schwarzkamp 38**
**W-4150 Krefeld (DE)**
Erfinder : **Grigo, Ulrich, Dr.**
**Michelsheide 9**
**W-4152 Kempen 3 (DE)**
Erfinder : **Casser, Carl, Dr.**
**Wolfskaul 7**
**W-5000 Köln 80 (DE)**
Erfinder : **Paetz, Klaus-Christian, Dr.**
**Rosenkranz 23**
**W-5093 Burscheid (DE)**
Erfinder : **Hajek, Manfred, Dr.**
**Tempelhofer Strasse 37**
**W-5090 Leverkusen (DE)**

EP 0 374 656 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind thermoplastische aromatische Polycarbonate mit mittleren Molekulargewichten $\overline{M}w$ von mindestens 10.000, bevorzugt von 10.000 bis 250.000, besonders bevorzugt von 10.000 bis 120.000, ganz besonders bevorzugt von 15.000 - 80.000 und insbesondere von 20.000 - 60.000, die bifunktionelle Carbonatstruktureinheiten der Formel (I)

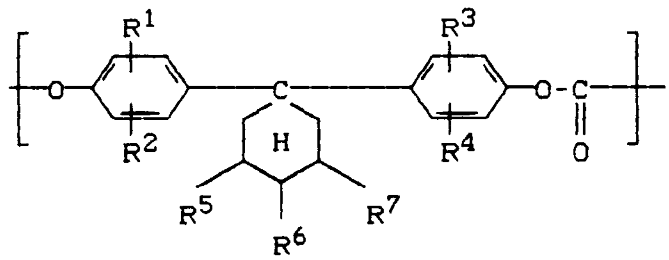

(I)

mit

$R^1$, $R^2$, $R^3$, $R^4$ unabhängig voneinander Wasserstoff, $C_1$-bis $C_{12}$-Kohlenwasserstoffrest, Halogen und
$R^5$, $R^6$, $R^7$ Wasserstoff, tertiär Butyl
wobei jeweils einer der Reste $R^5$, $R^6$ oder $R^7$ ungleich Wasserstoff ist,

in Mengen von 100 bis 1 Mol-%, bevorzugt 100 bis 5 Mol-% und besonders bevorzugt 100 bis 20 Mol-%, bezogen auf die Gesamtmenge von difunktionellen Carbonatstruktureinheiten im Polycarbonat, enthalten. Von den genannten Polycarbonaten mit 100 bis 20 Mol-% an bifunktionellen Carbonatstruktureinheiten der Formel (I) werden die mit 100-50 Mol-% bevorzugt, die mit 100-80 Mol-% besonders bevorzugt und die mit 100 Mol-% ganz besonders bevorzugt.

In den japanischen Patentschriften 61 062 039, 61 062 040 und 61 105 550 werden Polycarbonate beschrieben, die teilweise oder ganz aus Struktureinheiten der Formel (IA) bestehen, mit

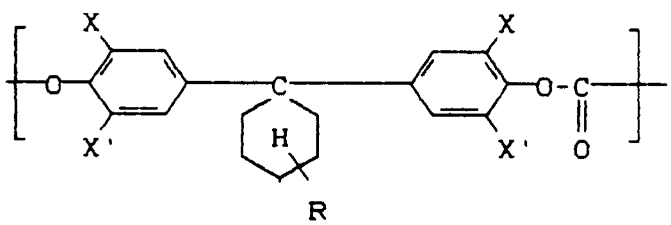

(IA)

X und X′ gleich Wasserstoff, Halogen oder Methyl und mit
R gleich Wasserstoff, Halogen, OH, COOH, Acetyl oder $C_1$-$C_4$-Alkyl (in JP 61 062 040 $C_1$-$C_5$-Alkyl).

In diesen Patentschriften werden in den Beispielen Polycarbonate verwendet, die ganz oder teilweise aus Einheiten der Formel (IA) bestehen.

Die Patentschriften geben keinen Hinweis darauf, daß Polycarbonate mit R = Iso-$C_3$-$C_5$-Alkyl anstatt mit R = Wasserstoff bessere Eigenschaften haben könnten.

Es wurde nun gefunden, daß die erfindungsgemäßen Polycarbonate überraschend hohe Glastemperaturen Tg besitzen, auch schon bei kleinen Anteilen an Carbonatstruktureinheiten der Formel (I). Ebenso haben sie ein besonders gutes Entformungsverhalten, außergewöhnlich gute Schmelzfließfähigkeit, insbesondere unter Berücksichtigung der hohen Glastemperatur $T_g$. Die erfindungsgemäßen Polycarbonate sind außerdem kriechstromfest, hydrolysestabil, UV-stabil und wärmealterungsstabil.

Den Carbonatstruktureinheiten der Formel (I) liegen Biphenole der Formel (II)

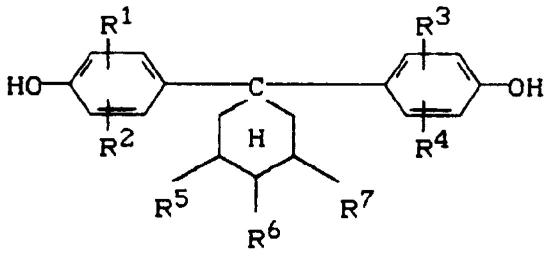

(II)

zugrunde, in der

$R^1$, $R^2$, $R^3$, $R^4$, $R^5$, $R^6$ und $R^7$ die gleiche Bedeutung wie in Formel (I) haben.

In den Formeln (I) und (II) sind $R^1$, $R^2$, $R^3$ und $R^4$ bevorzugt Wasserstoff, Methyl, Ethyl, Phenyl, Cyclohexyl, Chlor und Brom, besonders bevorzugt jedoch Wasserstoff, Methyl und Brom.

Wenn mehr als einer der Reste $R^1$, $R^2$, $R^3$ und $R^4$ ungleich Wasserstoff ist, werden gleiche Substituenten bevorzugt. Wenn zwei der Reste $R^1$, $R^2$, $R^3$ und $R^4$ ungleich Wasserstoff sind, wird die o,o'-Substitution, bezogen auf die Carbonatgruppen (Formel (I)) bzw. die phenolischen OH-Gruppen (Formel (II)), bevorzugt. Wenn alle vier Reste $R^1$, $R^2$, $R^3$ und $R^4$ ungleich Wasserstoff sind, wird die o,o,o' ,o'-Substitution, bezogen wie vor, bevorzugt.

In den Formeln (I) und (II) bedeuten $R^5$, $R^6$ und $R^7$ Wasserstoff und tert.-Butyl.

Die tert. Butyl- substituenten in den Formeln I und II sind bevorzugt in 4-Stellung im Cyclohexylidenring, wenn es auf die besonders gute Zugänglichkeit der Ausgangskomponenten ankommt, und in 3-Stellung im Cyclohexylidenring, wenn es auf besonders hohe Wärmestandfestigkeit des Polycarbonats ankommt.

Beispiele für Bisphenole der Formel (II) sind:

1,1-Bis-(4-hydroxyphenyl)-4-tert.-butyl-cyclohexan
1,1-Bis-(3-methyl-4-hydroxyphenyl)-4-tert.-butyl-cyclohexan
1,1-Bis-(3-methyl-4-hydroxyphenyl)-3-tert.-butyl-cyclohexan,
1,1-Bis-(3-chlor-4-hydroxyphenyl)-4-tert.-butyl-cyclohexan,
1,1-Bis-(3,5-dimethyl-4-hydroxyphenyl)-4-tert.-butyl-cyclohexan,
1,1-Bis-(3,5-dimethyl-4-hydroxyphenyl)-3-tert.-butyl-cyclohexan.
1,1-Bis-(3,5-dichlor-4-hydroxyphenyl)-4-tert.-butyl-cyclohexan
1,1-Bis-(3,5-dichlor-4-hydroxyphenyl)-3-tert.-butyl-cyclohexan
1,1-Bis-(3,5-dibrom-4-hydroxyphenyl)-4-tert.-butyl-cyclohexan
1,1-Bis-(3,5-dibrom-4-hydroxyphenyl)-3-tert.-butyl-cyclohexan,
1,1-Bis-(3-methyl-4-chlor-4-hydroxyphenyl)-4-tert.-butyl-cyclohexan,
1,1-Bis-(3-methyl-4-brom-4-hydroxyphenyl)-4-tert.-butyl-cyclohexan,
1,1-Bis-(3-methyl-4-chlor-4-hydroxyphenyl)-3-tert.-butyl-cyclohexan,
1,1-Bis-(3-methyl-4-brom-4-hydroxyphenyl)-3-tert.-butyl-cyclohexan.

Bisphenole der Formel (II) sind bekannt oder können nach üblichen Verfahren aus entsprechenden Ketonen und Phenolen hergestellt werden.

Die erfindungsgemäßen Polycarbonate enthalten neben den Carbonatstruktureinheiten der Formel (I) jeweils zu 100 Mol-% komplementäre Mengen an anderen difunktionellen Carbonatstruktureinheiten, beispielsweise solche der Formel (III), denen Bisphenole der Formel (IV) zugrundeliegen.

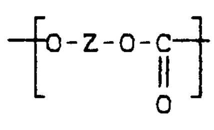

(III)

HO-Z-OH (IV)

Bisphenole der Formel (IV) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (IV) sind

Hydrochinon,
Resorcin,
Dihydroxydiphenyle,

Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (IV) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Als Verzweiger dienen, falls benutzt, in bekannter Weise geringe Mengen, vorzugsweise Mengen zwischen 0,05 und 2,0 Mol% (bezogen auf eingesetzte Diphenole), an drei- oder mehr als dreifunktionellen Verbindungen, insbeson dere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle Verbindungen in üblichen Konzentrationen. Geeignete Verbindungen sind z.B. sekundäre Amine, Phenole und Säurechloride. Bevorzugt werden Phenole, z.B. tert.-Butylphenole oder andere Alkyl-substituierte Phenole. Zur Regelung des Molekular gewichts sind insbesondere kleine Mengen Phenole der Formel (V) geeignet

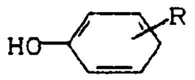

(V)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %.

Einige besonders geeignete Phenole sind Phenol, p-tert.-Butylphenol, Hydroxydiphenyl, p-Cumylphenol und insbesondere p-3,5-Dimethylheptylphenol und m- und p-1,1,3,3-Tetramethylbutylphenol. Die Kettenabbrecher werden im allgemeinen in Mengen von 0,1 bis 10, bevorzugt 0,5 bis 8 Mol-%, bezogen auf eingesetzte Diphenole, eingesetzt.

Die erfindungsgemäßen Polycarbonate können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden.

Hierbei werden die Diphenole der Formel (II) in wäßrig alkalischer Phase gelöst. Zur Herstellung von Co-Polycarbonaten mit anderen Diphenolen werden Gemische von Diphenolen der Formel (II) und den anderen Diphenolen, beispielsweise denen der Formel (IV), eingesetzt. Zur Regulierung des Molekulargewichtes können Kettenabbrecher z.B. der Formel (V) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt im allgemeinen zwischen 0° C und 40° C.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (II) sowie den anderen Diphenolen der Formel (IV) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Di-phenolat-Struktureinheiten von (II) und gegebenenfalls von den anderen Di-phenolat-Struktureinheiten wie beispielsweise von (IV); ebenso kann bei Einsatz von Chlorkohlensäureestern die Phosgenmenge in bekannter Weise entsprechend reduziert werden.

Als organische Phase für die Phasengrenzflächenpolykondensation sowie als organische Lösungsmittel für die Lösung der Kettenabbrecher sowie gegebenenfalls für die Verzweiger und die Chlorkohlensäureester können beispielsweise chlorierte Kohlenwasserstoffe, wie Chloroform, Dichlorethan, Di- und Tetrachlorethylen, Tetrachlorethan, Methylenchlorid, Chlorbenzol und Dichlorbenzol, aber auch nicht chlorierte Kohlenwasserstoffe, wie z.B. Toluol und Xylol, sowie Mischungen dieser Lösungsmittel, insbesondere Mischungen aus Methylenchlorid und Chlorbenzol dienen. Gegebenenfalls können die verwendeten Kettenabbrecher und Verzweiger im gleichen Solvens gelöst werden.

Als organische Phase für die Phasengrenzflächenpolykondensation dienen beispielsweise Methylenchlorid, Chlorbenzol oder Toluol sowie Mischungen aus Methylenchlorid und Chlorbenzol.

Als wäßrige alkalische Phase dient beispielsweise wäßrige NaOH-Lösung oder KOH-Lösung.

Die Herstellung der erfindungsgemäßen Polycarbonate nach dem Phasengrenzflächenverfahren kann in üblicher Weise durch Katalysatoren wie tertiäre Amine und Phasentransferkatalysatoren, insbesondere tertiäre aliphatische Amine wie z.B. Tributylamin, Triethylamin, N-Ethylpiperidin und insbesondere quartäre Ammonium- und Phosphoniumverbindungen und Kronenether, wie z.B. Tetrabutylammoniumbromid und Triphenylbenzylphosphoniumbromid katalysiert werden; die Katalysatoren werden im allgemeinen in Mengen von 0,05 bis 30 Mol-%, bezogen auf Mole an eingesetzten Diphenolen, eingesetzt. Die Katalysatoren werden im allgemeinen vor Beginn der Phosgenierung oder während oder auch nach der Phosgenierung zugesetzt.

Die Isolierung der erfindungsgemäßen Polycarbonate erfolgt in bekannter Weise, z.B. indem man die bei den Phasengrenzflächenverfahren erhaltene organische Phase mit dem gelösten Polycarbonat abtrennt, neutral und elektrolytfrei wäscht und dann das Polycarbonat beispielsweise über einen Eindampfextruder als Granulat, oder über Fällung mit Hilfe eines Nichtlösers und anschließende Trocknung oder über eine Sprühverdampfung als Pulver bzw. als Pellets isoliert.

Die erfindungsgemäßen hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die erfindungsgemäßen Polycarbonate in bekannter Weise isoliert.

Den erfindungsgemäßen Polycarbonaten können vor oder während ihrer Verarbeitung zu Farmkörpern die für thermoplastische Polycarbonate üblichen Additive, wie z.B. Stabilisatoren, Entformungsmittel, Pigmente, Brandschutz-Additive, Antistatika, Leitfähigkeitzusätze, Füllstoffe und Verstärkungsstoffe in den üblichen Mengen zugesetzt werden.

Als Brandschutzadditive kommen in Betracht:

1. Alkali-, Erdalkali- und Ammoniumsalze von aliphatischen und aromatischen Sulfonsäuren, Carbonsäuren und Phosphonsäuren. Diese können in mannigfacher Weise substituiert sein, z.B. durch F, Cl, Br, Alkyl. Solche salzartigen Brandschutzmittel können auch oligomer und polymer sein. Salzartige Brandschutzmittel sind u.a. in folgenden Patentanmeldungen beschrieben:

DE-OS 1694640, 1930257, 2049358, 2212987, 2149311,
2253072, 2703710, 2458527, 2458968, 2460786,
2460787, 2460788, 2460935, 2460937, 2460944,
2460945, 2460946, 2461063, 2461077, 2461144,
2461145, 2461146, 2644114, 2645415, 2646120,
2647271, 2648128, 2648131, 2653327, 2744015,
2744016, 2744016, 2744017, 2744018, 2745592,
2948871, 2948439, 3002122.

2. Organische Halogenverbindungen, gegebenenfalls in Kombination mit Synergisten, z.B. halogenierte Aromaten, Solche Substanzen sind u.a. in folgenden Patentanmeldungen beschrieben:

DE-OS 2631756, JA 51-119059, DE-OS 3342636, EP-A 31959, DE-OS 3010375, 2631756.

3. Halogenierte Phthalimide, Phthalimidsulfonate:

DE-OS 2703710, 3203905, 3322057, 3337857, 3023818.

4. Salze von halogenhaltigen Komplexsäuren, z.B. Kryolith, Salze der Tetrafluoroborsäure, der Fluorokieselsäure, beschrieben u.a. in DE-OS 2149311, 3023818.

5. Teilweise oder ganz fluorierte Polyolefine, z.B. beschrieben in DE-OS 2535262, 2915563, 2948439, 3023818.

6. Sulfonamide, Disulfonamide und Salze davon: EP-A 71125, 14322, WO 86/4911.

7. Elementarer Schwefel, roter Phosphor: DE-OS 2435508, 2355211

8. Ferrocen oder dessen Derivate: DE-OS 2644437.

9. Diphenylsulfon: DE-OS 2129204.

10. Nickel-Salze: DE-OS 1918216.

11. Polyphenylensulfid: DE-OS 2503336, EP-A 87038.

12. Alkali- und Erdalkali- sowie Zinksalze von Salzsäure, Schwefelsäure, Phosphorsäure, Salpetersäure, Schwefelwasserstoff, Borsäure sowie auch saure Salze dieser Säuren: WO 87/542, US 4408005, EP-A 174684.

13. Siloxane: DE-OS 2535261.

Als Comonomere, die dem Brandschutz dienen können, sind beschrieben:

1. Chloriertes und bromiertes BPA sowie 4,4′-Dihydroxy-diphenylsulfid: EP-A 31958, 61060.

2. Siloxanblöcke: DE-OS 3334782.

3. Dihydroxy-diphenylsulfone: US 3912688.

4. Sulfoanilid-Endgruppen: EP-A 82483.

Die Brandschutzmaßnahmen können einzeln oder gemeinsam zur Anwendung kommen.

Die Brandschutz-Additive werden einzeln oder zu mehreren gemeinsam vorzugsweise in Extrudern oder Knetern in die Polycarbonate, die Diphenole der Formel I einkondensiert enthalten, eingearbeitet. In vielen Fällen können die Brandschutzmittel den Polycarbonaten schon während der Herstellung oder auch schon den Ausgangsstoffen zugesetzt werden. Weiterhin können die Brandschutzmittel auch Lösungen der Polycarbonate zugegeben werden mit anschließender Einengung der Lösungen zur Trockne. Die Brandschutzmitteladditive werden bevorzugt in Mengen von 0,001 bis 50 Gew.-%, die Brandschutz-Comonomeren bevorzugt in Mengen von 0,1 bis 50 Mol-% verwendet.

Im einzelnen können beispielsweise Graphit, Ruß, Metallfasern, Metallpulver, Kieselgur, Quarz, Talkum, Glimmer, Kaolin, Tone, $CaF_2$, $CaCO_3$, Aluminiumoxide, Glasfasern, C-Fasern, Keramik-Fasern, und organische und anorganische Pigmente zugesetzt werden, sowie als Entformungsmittel beispielsweise Glycerinstearate, Pentaerythrittetrastearat und Trimethylolpropantristearat.

Die erfindungsgemäßen Polycarbonate können nach den Regeln der thermoplastischen Verarbeitung zu Formkörpern verarbeitet werden, indem man beispielsweise die in bekannter Weise isolierten Polycarbonate zu Granulat extrudiert und dieses Granulat, gegebenenfalls nach Zusatz der obengenannten Additive z.B. durch Spritzguß, Extrusion, Blasverformen, Rotationsguß oder Warmverpressen zu verschiedenen Formkörpern in bekannter Weise verarbeitet. Unter Formkörpern werden auch Fasern, Platten und Folien verstanden. Letzere können auch durch Tiefziehverfahren weiter umgeformt werden. Die Folien können in Verbund mit anderen Folien zu Verbundfolien verarbeitet werden. Weiterhin können die erfindungsgemäßen Polycarbonate auch in anderen Verbundwerkstoffen eingesetzt werden, z.B. in Kombination mit Fasern und anderen Polymeren.

Die erfindungsgemäßen Polycarbonate sind als Formkörper z.B. im Elektrosektor sowie im Bausektor mit Vorteil einsetzbar, und zwar insbesondere dann, wenn komplizierte Bauteile hoher Wärmeformbeständigkeit verlangt werden.

Beispiel 1

Polycarbonat aus 1,1-Bis-(4-hydroxyphenyl)-4-tert.-butylcyclohexan

In 3 l Wasser wurden 184 g (4,6 Mol) NaOH und 324 g (1 Mol) 1,1-Bis-(4-hydroxyphenyl)-4-tert.-butylcyclohexan gelöst. Dazu wurden 3 l Methylenchlorid mit darin gelöstem 6,8 g (0,033 Mol) 4-(1,1,3,3-Tetramethylbutyl)phenol gegeben. Unter intensivem Rühren wurden dann bei 25° C 148,5 g (1,5 Mol) Phosgen innerhalb von 30 Minuten in das Gemisch eingeleitet. Nach Zugabe von 1,13 g (0,01 Mol) N-Ethylpiperidin wurde das Gemisch 60 Minuten bei 25° C intensiv gerührt. Die bisphenolatfreie alkalisch-wäßrige Phase wurde abgetrennt; die organische Phase nach dem Ansäuern mit verdünnter Phosphorsäure mit Wasser elektrolytfrei gewaschen und eingedampft. Das erhaltene Polycarbonat wurde dann durch Trocknung vom restlichen Methylenchlorid befreit. Es war farblos und zeigte eine relative Viskosität ηrel von 1,313 (gemessen in einer Methylenchlorid-Lösung, c = 5 g/l, bei 25° C). Die Glastemperatur Tg (nach Differentialthermoanalyse) betrug 221°C.

Beispiel 3

Copolymerisat aus Bisphenol-A und 1,1-Bis-(4-hydroxyphenyl)-4-tert.-butyl-cyclohexan im Molverhältnis 1:1

Beispiel 1 wurde wiederholt mit dem Unterschied, daß die Hälfte des dort eingesetzten Bisphenols durch 114 g (0,5 Mol) 2,2-Bis-(4-hydroxyphenyl)-propan (Bisphenol A) ersetzt wurde.

Das erhaltene Polycarbonat hatte eine relative Viskosität ηrel von 1,301 (gemessen in einer Methylenchlorid-Lösung bei 25° C, c = 5 g/l). Die Glastemperatur Tg (nach Differentialthermoanalyse) betrug 192° C.

Beispiel 4

Polycarbonat aus 1,1-Bis-(4-hydroxyphenyl)-3-tert.-butyl-cyclohexan

Die Verfahrensweise des Beispiels 1 wurde wiederholt mit dem Unterschied, daß statt des dort eingesetzten Bisphenols 324 g (1 Mol) 1,1-Bis-(4-hydroxyphenyl)-3-tert.-butyl-cyclohexan verwendet wurden. Das erhaltene Poly carbonat hatte eine relative Viskosität von 1,309 (gemessen in einer Methylenchlorid-Lösung, c = 5 g/l, bei 25° C). Die Glastemperatur $T_g$ (nach Differentialthermoanalyse) war 239° C.

Beispiel 6

Beispiel 1 wurde wiederholt, aber 10 Mol-% des Diphenols durch 3,3′,5,5′-Tetrabrom-bisphenol A ersetzt. Das erhaltene Polycarbonat zeigte ηrel von 1,302.

Beispiele 7-46

Die Ergebnisse der Brandprüfungen der mit Brandschutzmitteln ausgerüsteten Polycarbonate sind in Tabelle 1 zusammengestellt. Die Brandschutzmittel wurden mit einem Doppelwellenextruder ZSK 32 der Firma Werner & Pfleiderer eingearbeitet.

Das Brandverhalten wurde anhand des $O_2$-Index gemäß ASTM-D 2863-70 beurteilt. Für diese Untersuchungen wurden Prüfstäbe der Abmessungen 80 x 6 x 3 mm durch Spritzgießen hergestellt.

Tabelle 1

| Beispiel | Polycarbonat von Beispiel | Brandschutzmittel | Menge, % | $O_2$-Index, % |
|---|---|---|---|---|
| 7 (Vergleich) | 1 | - | - | 24,1 |
| 8 (Vergleich) | 2 | - | - | 24,5 |
| 9 (Vergleich) | 3 | - | - | 24,3 |
| 10 | 6 | - | - | 28,6 |
| 11 | 1 | K-p-Toluolsulfonat | 0,2 | 28,2 |
| 13 | 3 | " | " | 28,5 |
| 14 | 6 | " | " | 33,4 |
| 15 | 1 | Perfluor-n-butan-K-sulfonat | " | 29,4 |
| 17 | 1 | 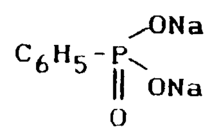 | " | 29,5 |

T a b e l l e 1 (Fortsetzung)

| Beispiel | Polycarbonat von Beispiel | Brandschutzmittel | Menge, % | $O_2$-Index, % |
|---|---|---|---|---|
| 18 | 1 | 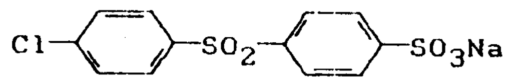 | " | 30,7 |
| 19 | 3 | " | " | 30,5 |
| 20 | 1 | Decabromdiphenyl | 5 | 29,0 |
| 22 | 1 | " + $Sb_2O_3$ | 5 + 2 | 31,8 |
| 23 | 1 | 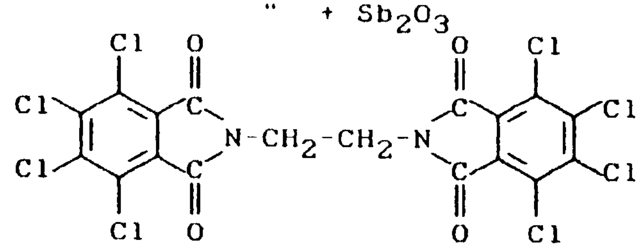 | 3 | 31,0 |

Tabelle 1 (Fortsetzung)

| Beispiel | Polycarbonat von Beispiel | Brandschutzmittel | Menge, % | $O_2$-Index, % |
|---|---|---|---|---|
| 24 | 1 | $Na_3AlF_6$ | 0,2 | 29,7 |
| 25 | 3 | " | 0,2 | 30,4 |
| 26 | 3 | " + Polytetrafluorethylen wie Bsp. 27 | 0,2 + 0,1 | 33,3 |
| 27 | 3 | Polytetrafluorethylen, Hostaflon 1740 der Hoechst AG | 0,2 | 26,7 |
| 28 | 1 | Polytetrafluorethylen, Hostaflon 1740 der Hoechst AG | 0,2 | 27,2 |
| 29 | 1 | 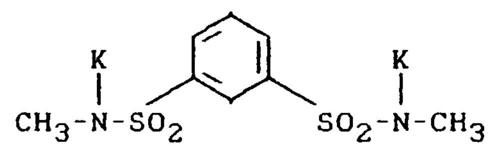 | 0,4 | 29,5 |
| 30 | 1 | Schwefel | 5 | 30,1 |
| 31 | 1 | roter Phosphor, mittlere Teilchen-ø 35 µm | 5 | 36,1 |

**T a b e l l e 1** (Fortsetzung)

| Beispiel | Polycarbonat von Beispiel | Brandschutzmittel | Menge, % | $O_2$-Index, % |
|---|---|---|---|---|
| 32 | 1 | Ferrocen, mittlerer Teilchen-ø 28 µm | 0,1 | 27,2 |
| 33 | 1 | Diphenylsulfon | 3 | 27,3 |
| 34 | 1 | Ni-Laurinat | 0,02 | 27,5 |
| 35 | 1 | Polyphenylensulfid gemäß EP-A 171 021 der Schmelzeviskosität 53 Pa.s bei der Scherrate 100 Pa bei 306° C | 10 | 31,5 |
| 36 | 3 | Polyphenylensulfid gemäß EP-A 171 021 der Schmelzeviskosität 53 Pa.s bei der Scherrate 100 Pa bei 306° C | 10 | 31,7 |
| 37 | 1 | NaCl | 0,3 | 27,6 |
| 38 | 1 | $K_2HPO_4$ | 0,2 | 28,5 |
| 38a | 1 | $Li_2SO_4$ | 0,2 | 27,9 |
| 39 | 1 | $NaNO_3$ | 0,2 | 30,3 |
| 40 | 1 | ZnS | 0,5 | 28,5 |
| 41 | 3 | ZnS | 0,5 | 28,6 |
| 42 | 1 | NaHS | 0,2 | 27,0 |
| 43 | 1 | $Na_3B_4O_7$ | 0,2 | 28,2 |

Tabelle 1 (Fortsetzung)

| Beispiel | Polycarbonat von Beispiel | Brandschutzmittel | Menge, % | $O_2$-Index, % |
| --- | --- | --- | --- | --- |
| 44 | 1 | Polydimethylsiloxan der Viskosität 170 000 mPa.s | 7 | 28,7 |
| 45 | 1 | Polysiloxan-Block-Co-Polycarbonat von Beispiel 3 der DE-OS 3 334 782 | 50 | 28,9 |

## Patentansprüche

1. Thermoplastische aromatische Polycarbonate mit mittleren Molekulargewichten $\overline{M}w$ von mindestens 10 000, die bifunktionelle Carbonatstruktureinheiten der Formel (I)

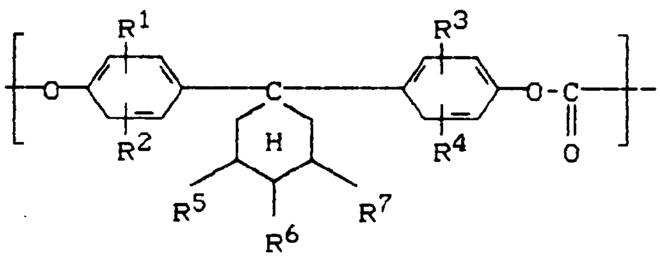

(I)

mit

$R^1$, $R^2$, $R^3$, $R^4$ unabhängig voneinander Wasserstoff, $C_1$-bis $C_{12}$-Kohlenwasserstoffrest, Halogen

und

$R^5$, $R^6$, $R^7$ Wasserstoff oder tertiär Butyl

wobei jeweils einer der Reste $R^5$, $R^6$ oder $R^7$ ungleich Wasserstoff ist,

in Mengen von 100 bis 1 Mol-%, bezogen auf die Gesamtmenge von difunktionellen Carbonatstruktureinheiten im Polycarbonat, enthalten.

2. Thermoplastische aromatische Polycarbonate des Anspruchs 1, mit Additiven und/oder Comonomeren brandwidrig ausgerüstet.

## Claims

1. Thermoplastic aromatic polycarbonates having average molecular weights $\overline{M}w$ of at least 10,000 which contain bifunctional carbonate structural units corresponding to formula (I)

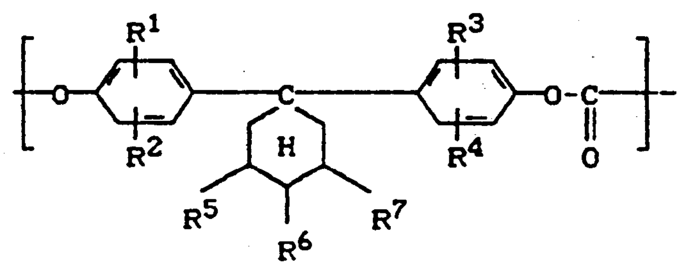

(I)

in which

$R^1$, $R^2$, $R^3$ and $R^4$ independently of one another represent hydrogen, a $C_{1-12}$ hydrocarbon radical, halogen and

$R^5$, $R^6$ and $R^7$ represent hydrogen or tert. butyl,

one of the substituents $R^5$, $R^6$ or $R^7$ not being hydrogen, in quantities of from 100 to 1 mol-%, based on the total quantity of difunctional carbonate structural units in the polycarbonate.

2. Thermoplastic aromatic polycarbonates as claimed in claim 1 flameproofed with additives and/or comonomers.

## Revendications

1. Polycarbonates thermoplastiques aromatiques de poids moléculaires moyens $\overline{M}w$ d'au moins 10.000, contenant des unités structurelles carbonate bifonctionnelles de formule (I)

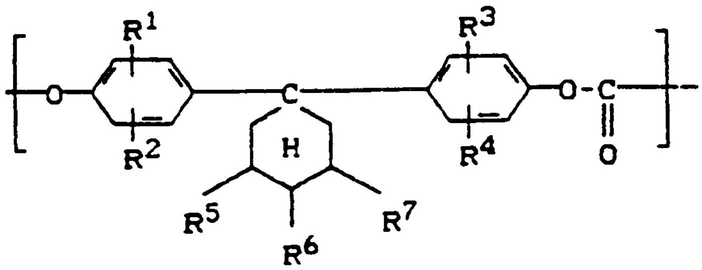

(I)

dans laquelle

$R^1$, $R^2$, $R^3$, $R^4$ représentent indépendamment l'un de l'autre l'hydrogène, un reste d'hydrocarbure en $C_1$ à $C_{12}$, un halogène, et

$R^5$, $R^6$, $R^7$ représentent l'hydrogène, un reste butyle tertiaire, l'un des restes $R^5$, $R^6$, $R^7$ étant chaque fois différent de l'hydrogène,

en quantités de 100 à 1 mol-%, par rapport à la quantité totale d'unités structurelles carbonate bifonctionnelles présentes dans le polycarbonate.

2. Polycarbonates thermoplastiques selon la revendication 1, rendus résistants au feu au moyen d'additifs et/ou de comonomères.